# EUROPEAN PATENT APPLICATION

(11) **EP 4 679 166 A1**
(43) Date of publication of application: **14.01.2026**
(21) Application number: 25188691.7
(22) Date of filing: 10.07.2025
(51) Int. Cl.: G02C 11/00

(54) **ROD FOR A DEVICE AND WEARABLE DEVICE COMPRISING SUCH ROD**

(30) Priority: 12.07.2024 IT 202400016279
(71) Applicant: Luxottica S.r.l., 32021 Agordo (IT)
(72) Inventor: CANDIOTTO, Gianluca, 32021 Agordo (BL) (IT); PONTILLO, Pietro, 32021 Agordo (BL) (IT); BILTON, Simon Lewis, Warwick, CV34 4AB (GB); BOZEAT, James David Spencer, Warwick, CV34 4AB (GB)
(74) Representative: Biallo, Dario

(57) **Abstract**

Rod (100) for a device (200), wherein the rod (100) comprises a first portion (101) associable with a device (200), wherein the first portion (101) comprises a first housing seat (110), and a second portion (102) rotatably coupled to the first portion (101), wherein the second portion (102) is insertable into/extractable from said first housing seat (110), the second portion (102) comprises a second housing seat (120) facing a first bottom wall (111) of the first housing seat (110) when the second portion (102) is inserted into the first housing seat (110), wherein the second housing seat (120) is accessible when the second portion (102) is extracted from the first housing seat (110), at least one electronic component (130) adapted to be inserted into/extracted from said second housing seat (120), a first extraction aid element (140) configured to extract the second portion (102) from the first housing seat (110).

## Description

The present invention relates to a rod for a device and to a wearable device comprising such rod.

The present invention also relates to a frame and to an eyewear comprising such rod.

Wearable device means any type of device designed to be worn in front of at least one eye of the wearer and with a frame configured to be mounted on the wearer's head. For example, smart eyewear is a particular type of wearable device.

For simplicity of exposition and discussion, reference will be made hereinafter to smart eyewear.

As is known, smart eyewear, also referred to as intelligent eyewear, virtual eyewear, or digital eyewear, means a pair of eyewear comprising electronic devices adapted to operate as a computer, i.e., capable of providing support to the activities performed by the user wearing them, whether in everyday and private context or in work, business, or any other particular context.

Such components allow, for example, to play video and audio, record, operate computer applications, recognize natural language, shapes and objects arranged in the surrounding environment.

Generally, known smart eyewear provides that the electronic and/or electrical components are integrated into the frame of the eyewear.

The electronic and/or electrical components are adapted to be electrically powered by a battery, in some cases removable, also integrated into the frame. The battery can be rechargeable.

Usually, it is necessary to replace the battery to extend the service life of the eyewear in which it is installed, or to ensure the continuous operation of the smart eyewear in the case where access to charging sources is unavailable.

Removing the battery from the eyewear also allows for easier disposal and recycling of the battery itself. Indeed, the pair of smart eyewear is not entirely replaced and disposed, but only the battery.

Some known smart eyewear comprises a seat, for example obtained in a rod of the eyewear, adapted to receive the battery so as to protect it from impacts and from external agents such as water and dust.

Typically, in order to retain the battery in such seat, it is known to use closure doors fixable to the rod by fixing means, for example screws, or other connecting means, for example glue or adhesives. Replacing the battery is, therefore, cumbersome, since it requires the use of tools, for example screwdrivers, or solvents or thermal energy to remove the doors and extract the battery.

The object of the present invention is to overcome the above-mentioned drawbacks and, in particular, to ideate a rod for a device, a device, a frame, and eyewear comprising such rod, which allow a battery to be easily installed and extracted, in order to replace it.

These and other objects according to the present invention are achieved by making a rod for a device as set forth in claim 1, a device comprising such rod as set forth in claim 11, a frame comprising such rod as set forth in claim 13, and eyewear as set forth in claim 14.

Further features of the rod for a device and of the device comprising such rod are the subject of the dependent claims.

The features and advantages of a rod for a device, and of a device, a frame, and eyewear comprising such rod according to the present invention will become more apparent from the following exemplary and non-limiting description, referred to the attached schematic drawings, in which:
- Figure 1 is a perspective view of a rod for a device according to an embodiment of the present invention in a first configuration of use;
- Figure 2 is a partially transparent side view of the rod of Figure 1;

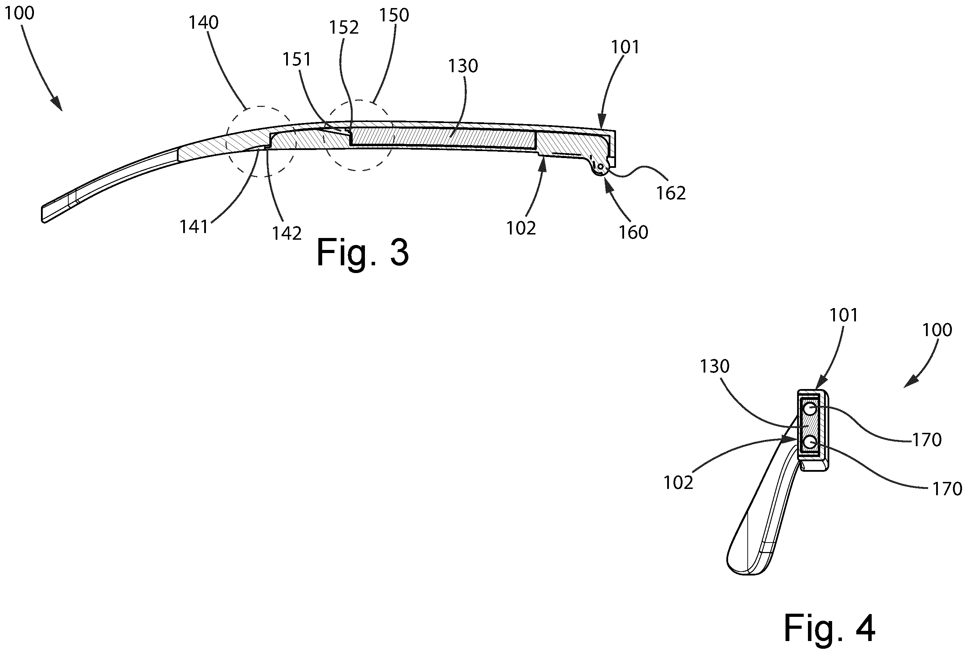

- Figure 3 is a first sectional view along section line III-III of Figure 2;
- Figure 4 is a second sectional view along section line IV-IV of Figure 2;

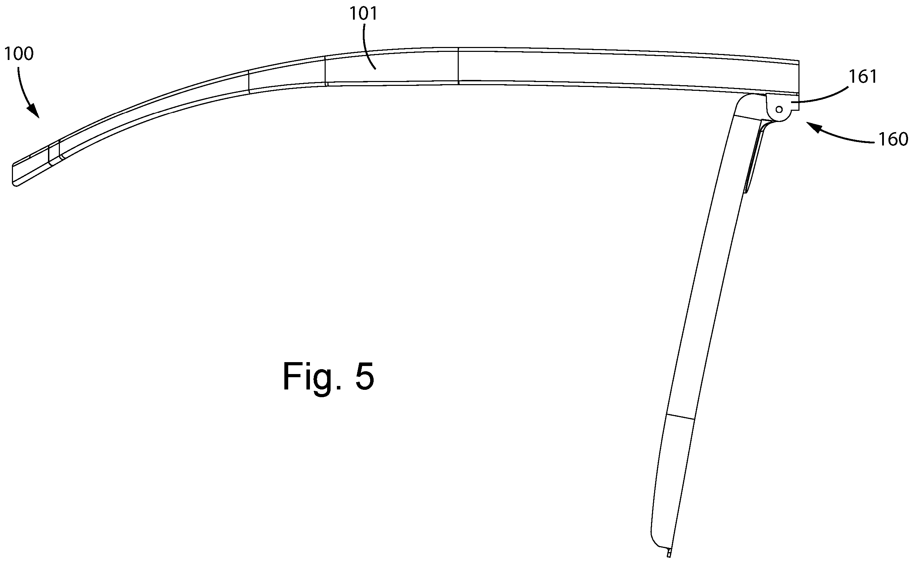

- Figure 5 is a top view of the rod of Figure 1 in an opening and closing position;

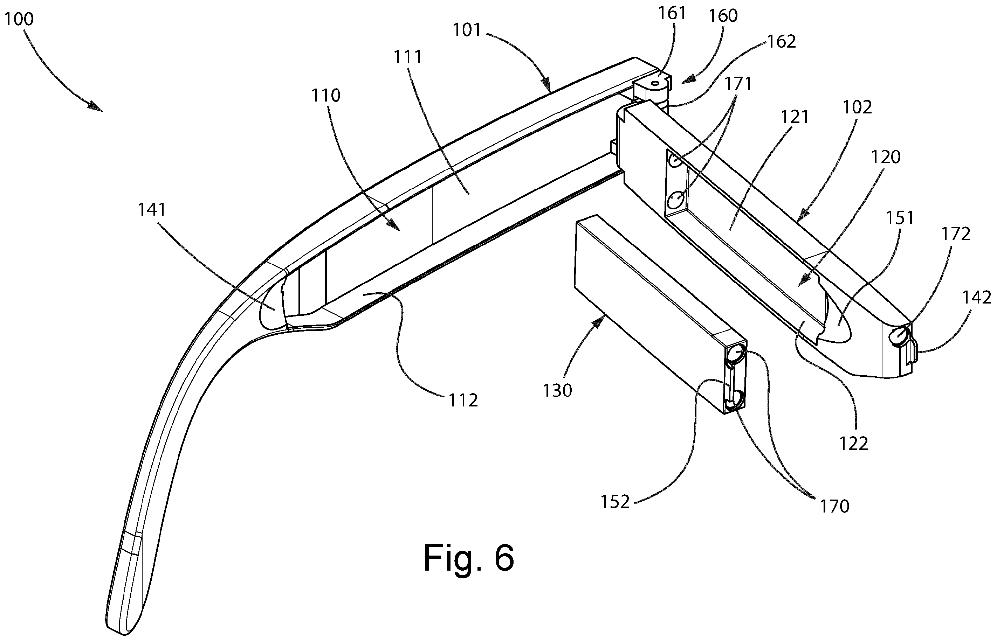

- Figure 6 is a perspective view of the rod of Figure 1 in a second configuration of use;
- Figure 7 is a perspective view of a preferred embodiment of a device comprising the rod of Figure 1 according to the present invention in a first configuration of use;
- Figure 8 is a perspective view of the device of Figure 7 in a second configuration of use;
- Figure 9 is a perspective view of the device of Figure 8 in which the rod is in an intermediate position between the opening position and the closing position.

With reference to the figures, a rod for a device, overall indicated by 100, is shown.

The rod 100 comprises a first portion associable with a device 200.

The first portion 101 comprises a first housing seat 110.

The rod 100 comprises a second portion rotatably coupled to the first portion 101.

The second portion 102 is insertable into the first housing seat 110. Furthermore, the second portion 102 is extractable from the first housing seat 110.

The second portion 102 comprises a second housing seat 120 facing a first bottom wall 111 of the first housing seat 110 when the second portion 102 is inserted into the first housing seat 110.

The second housing seat 120 is accessible when the second portion 102 is extracted from the first housing seat 110.

In more detail, the first housing seat 110 is defined by the first bottom wall 111 and a first perimeter wall 112.

The second housing seat 120 is instead defined by a second bottom wall 121 and a second perimeter wall 122. When the second portion 102 is inserted into the first housing seat 110, the first housing seat 110 and second housing seat 120 define a closed space not accessible from the outside.

The rod 100 comprises at least one electronic component 130 adapted to be inserted into the second housing seat 120. Furthermore, the at least one electronic component 130 is adapted to be extracted from the second housing seat 120.

In more detail, the at least one electronic component 130 is insertable into/extractable from said second housing seat 120 when the second portion 102 is extracted from the first housing seat 110.

When the at least one electronic component 130 is extracted from the second housing seat 120 and the second portion 102 is inserted into the first housing seat 110, the first bottom wall 111 faces the second bottom wall 121.

In more detail, the at least one electronic component 130 is adapted to be inserted into/extracted from said second housing seat repeatedly, i.e., a plurality of times.

The rod 100 comprises a first extraction aid element 140 configured to extract the second portion 102 from the first housing seat 110.

When the second portion 102 is extracted from the first housing seat 110, the second housing seat 120 becomes accessible, and it is possible to insert or extract the at least one electronic component 130 into or from the second housing seat 120.

According to a particular embodiment, as shown in the attached figures, the first extraction aid element 140 comprises a first recess 141 obtained on the first portion 101 and facing outwards.

In such case, the first extraction aid element 140 comprises a first tooth 142 associated with the second portion 102. The first tooth 142 faces the first recess 141 when the second portion 102 is inserted into the first housing seat 110.

The first recess 141 facilitates the grip of the first tooth 142 by a user wishing to extract the second portion 102 from the first housing seat 110.

Preferably, a first interspace is defined between the first portion 101 and the first tooth 142 when the second portion 102 is inserted into the first housing seat 110. In this way, the grip of the first tooth 142 by the user is further facilitated.

Preferably, as shown in the particular embodiment illustrated in the attached figures, the rod 100 comprises a second extraction aid element 150 accessible when the second portion 102 is extracted from the first housing seat 110.

The second extraction aid element 150 is therefore not accessible when the second portion 102 is inserted into the first housing seat 110.

The second extraction aid element 150 comprises a second recess 151 obtained on the second portion 102. The second recess 151 faces the first housing seat 110 when the second portion 102 is inserted into the first housing seat 110.

Furthermore, the second extraction aid element 150 comprises a second tooth 152 associated with the at least one electronic component 130.

The second tooth 152 faces the second recess 151 when the at least one electronic component 130 is inserted into the second housing seat 120.

The second recess 151 facilitates the grip of the second tooth 152 by a user wishing to extract the at least one electronic component 130 from the second housing seat 120.

Preferably, a second interspace is defined between the second portion 102 and the second tooth 152 when the at least one electronic component 130 is inserted into the second housing seat 120.

In this way, the grip of the second tooth 152 by the user is further facilitated.

Preferably, the second portion 102 is interlockable into the first housing seat 110.

Preferably, the at least one electronic component 130 is interlockable into the second housing seat 120. Preferably, the rod 100 comprises a hinge 160 comprising a first hinge part 161 and a second hinge part 162.

The first hinge part 161 is associated with the first portion 101 and couplable to a device 200. The first hinge part 161 is configured to rotatably couple the first portion 101 to the device 200.

The first hinge part 161 comprises a first element integral with the first portion 101 and a second element integral with the device 200.

The second hinge part 162 is associated with the first portion 101 and the second portion 102. In particular, the second hinge part 162 is integrally coupled to the second portion 102, for example, it is fixed thereto. Furthermore, the second hinge part 162 is rotatably coupled to the first portion 101.

In particular, the second portion 102 is rotatably coupled to the first portion 101 through the second hinge part 162.

Indeed, the second hinge part 162 allows the second portion 102 to rotate with respect to the first portion 101.

Preferably, the first hinge part 161 and the second hinge part 162 are aligned on a single axis, for example by means of a pin.

Preferably, the at least one electronic component 130 comprises first contacts 170 configured to face second contacts 171 when the at least one electronic component 130 is inserted into the second housing seat 120.

In particular, the second contacts 171 face the second housing seat 120.

Preferably, the second contacts 171 are arranged on the second perimeter wall 122.

Preferably, the first contacts 170 are electrical contacts.

Preferably, the second contacts 171 are electrical contacts.

Alternatively, the first contacts 170 are magnetic contacts. In such case, the second contacts 171 are magnetic contacts.

Preferably, the first magnetic contacts 170 and the second magnetic contacts 171 are magnets having polarities opposite to each other.

For example, the first magnetic contacts 170 can have positive polarity and the second magnetic contacts 171 can have negative polarity, or vice versa, respectively. The first magnetic contacts 170 and the second magnetic contacts 171 stabilize the at least one electronic component 130 when it is inserted into the second housing seat 120.

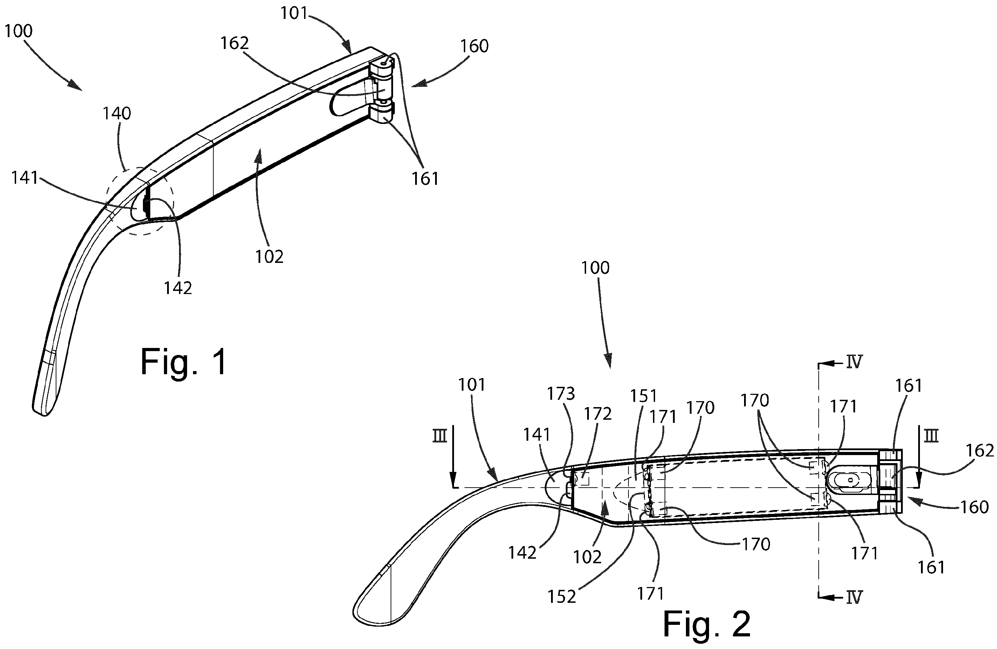

Preferably, as shown in particular in Figure 2, the at least one electronic component 130 can comprise at least two pairs of first contacts 170, opposite to each other, respectively. In such case, the second housing seat 120 can comprise at least two pairs of second contacts 171 facing the two pairs of first electrical contacts 170. Preferably, the first contacts of at least one of said two pairs of first contacts 170 are electrical contacts.

Preferably, the second contacts of at least one of said two pairs of second contacts 171 are electrical contacts. Preferably, the first contacts of at least one of said two pairs of first contacts 170 are magnetic. In such case, the second contacts of at least one of said two pairs of second contacts 171 are magnetic.

Preferably, the second portion 102 comprises third magnetic contacts 172. In such case, the first portion 101 comprises fourth magnetic contacts 173 configured to face the third magnetic contacts 172 when the second portion 102 is inserted into the first housing seat 110. In more detail, the fourth magnetic contacts 173 are magnetically coupled to the third magnetic contacts 172 when the second portion 102 is inserted into the first housing seat 110.

The third magnetic contacts 172 and the fourth magnetic contacts 173 stabilize the insertion of the second portion 102 into the first housing seat 110, for example, by preventing the second portion 102 from being unintentionally extracted from the first housing seat 110.

Preferably, the third magnetic contacts 172 and the fourth magnetic contacts 173 are magnets having polarities opposite to each other.

For example, the third magnetic contacts 172 can have positive polarity and the fourth magnetic contacts 173 can have negative polarity, or vice versa, respectively. Preferably, the at least one electronic component 130 is a rechargeable battery.

Preferably, the rod 100 is a temple for eyewear.

The present invention also relates to a device 200. Advantageously, the device 200 comprises the rod 100. In such case, the first portion 101 is associated with the device 200.

Preferably, the first portion 101 is rotatably coupled to the device 200. In such case, the rod 100 can comprise the hinge 160.

Alternatively, the first portion 101 is made in a single piece with the device 200.

Preferably, the device 200 can comprise two rods 100. Preferably, the device 200 is wearable.

The present invention also relates to a frame 300.

The frame 300 comprises a front 310 and at least one rod 100, as described above, in which the first portion 101 of the rod 100 is associated with the front 310. Preferably, the first portion 101 is rotatably coupled to the frame 300. In such case, the rod 100 can comprise the hinge 160.

Alternatively, the first portion 101 is made in a single piece with the frame 300.

Preferably, the frame 300 can be integrated into the device 200.

The present invention also relates to eyewear.

The eyewear comprises the frame 300.

Preferably, the front 310 of the frame 300 of the eyewear is adapted to hold at least one lens.

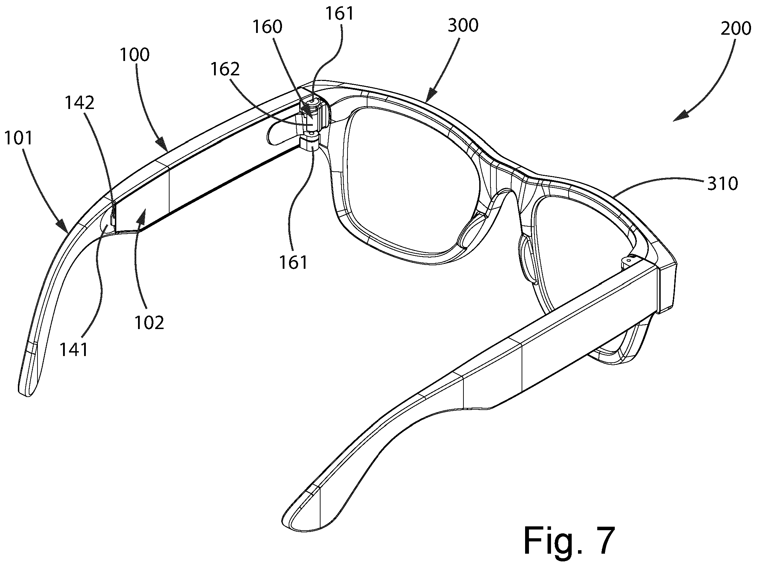

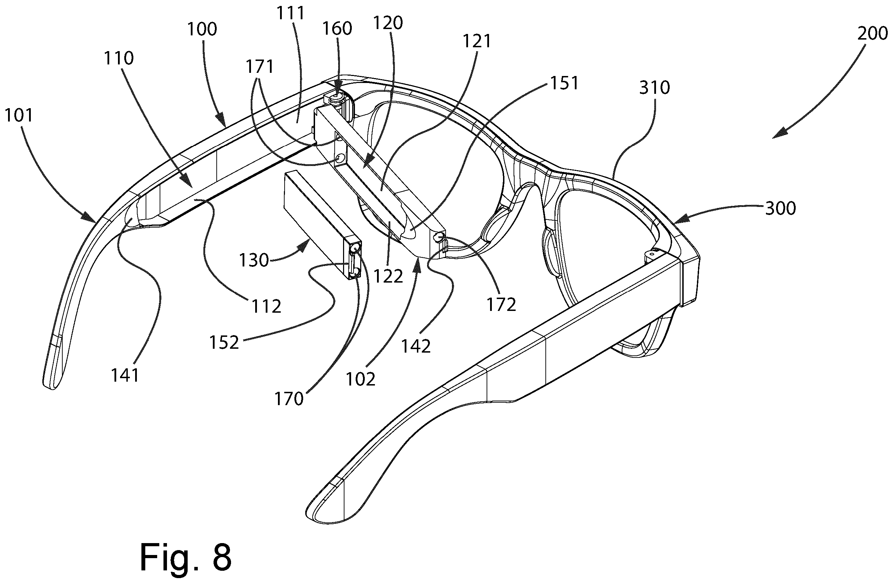

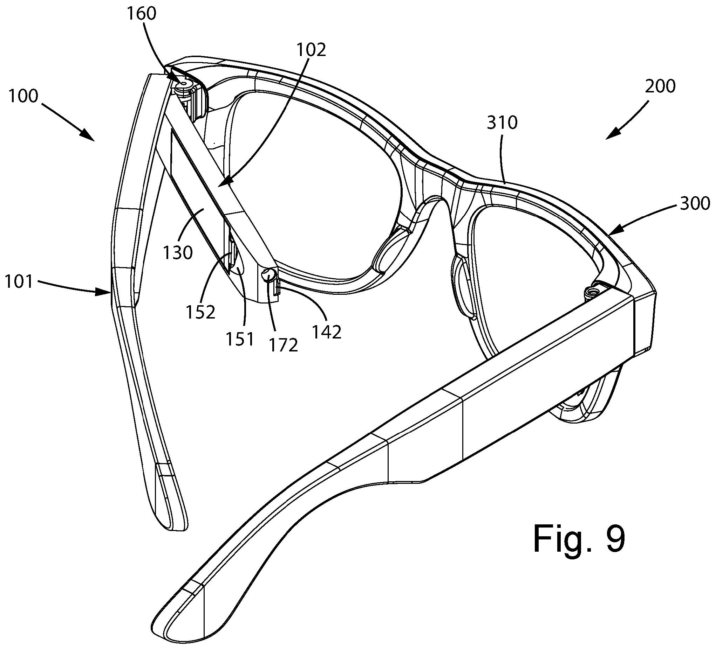

The eyewear, as shown in Figures 7-9, are a particular type of wearable device 200 comprising the frame 300. Preferably, the eyewear comprises two rods 100.

From the description carried out, the features of the rod for a device, the device, the frame, and the eyewear comprising such rod being the subject of the present invention are clear, as are the related advantages.

Indeed, the first extraction aid element facilitates the extraction of the second portion from the first portion in order to allow the at least one electronic component to be inserted into/extracted from the rod.

Finally, it is clear that the rod for a device, and the device, frame, and eyewear comprising such rod thus conceived, are susceptible to numerous modifications and variants, all falling within the invention; furthermore, all details are replaceable by technically equivalent elements. In practice, the materials used, as well as the dimensions, can be any depending on the technical requirements.

## Claims

1. Rod (100) for a device (200), said rod (100) comprising:
- a first portion (101) associable with a device (200), said first portion (101) comprising a first housing seat (110),
- a second portion (102) rotatably coupled to said first portion (101), said second portion (102) being insertable into/extractable from said first housing seat (110),
said second portion (102) comprising:
- a second housing seat (120) facing a first bottom wall (111) of said first housing seat (110) when said second portion (102) in inserted into said first housing seat (110), said second housing seat (120) being accessible when said second portion (102) is extracted from said first housing seat (110),
- at least one electronic component (130) adapted to be inserted into/extracted from said second housing seat (120),
- a first extraction aid element (140) configured to extract said second portion (102) from said first housing seat (110).

2. Rod (100) according to claim 1, wherein said first extraction aid element (140) comprises:
- a first recess (141) obtained on said first portion (101) and facing outwards,
- a first tooth (142) associated with said second portion (102) and facing said first recess (141) when said second portion (102) in inserted into said first housing seat (110).

3. Rod (100) according to claim 2 wherein a first interspace is defined between said first portion (101) and said first tooth (142) when said second portion (102) in inserted into said first housing seat (110).

4. Rod (100) according to one or more of the preceding claims, comprising a second extraction aid element (150) accessible when said second portion (102) is extracted from said first housing seat (110).

5. Rod (100) according to claim 4, wherein said second extraction aid element (150) comprises:
- a second recess (151) obtained on said second portion (102) and facing said first housing seat (110) when said second portion (102) is inserted into said first housing seat (110),
- a second tooth (152) associated with said at least one electronic component (130), said second tooth (152) facing said first recess (151) when said at least one electronic component (130) is inserted into said second housing seat (120).

6. Rod (100) according to claim 5 wherein a second interspace is defined between said second portion (102) and said second tooth (152) when said at least one electronic component (130) is inserted into said second housing seat (120).

7. Rod (100) according to one or more of the preceding claims, wherein said second portion (102) is interlockable into said first housing seat (110).

8. Rod (100) according to one or more of the preceding claims, comprising a hinge (160) comprising:
- a first hinge part (161) configured to rotatably couple the first portion (101) to a device (200);
- a second hinge part (162) associated with said first portion (101) and with said second portion (102).

9. Rod (100) according to one or more of the preceding claims, wherein the at least one electronic component (130) comprises first contacts (170) configured to face second contacts (171) when said at least one electronic component (130) is inserted into said second housing seat (120), said second contacts (171) facing said second housing seat (120).

10. Rod (100) according to claim 9, wherein said second portion (102) comprises third magnetic contacts (172), said first portion (101) comprising fourth magnetic contacts (173) configured to face said third magnetic contacts (172) when said second portion (102) is inserted into said first housing seat (110).

11. Device (200) comprising at least one rod (100), said rod (100) comprising:
- a first portion (101) associated with said device (200), said first portion (101) comprising a first housing seat (110),
- a second portion (102) rotatably coupled to said first portion (101), said second portion (102) being insertable into/extractable from said first housing seat (110),
said second portion (102) comprising:
- a second housing seat (120) facing a first bottom wall (111) of said first housing seat (110) when said second portion (102) in inserted into said first housing seat (110), said second housing seat (120) being accessible when said second portion (102) is extracted from said first housing seat (110),
- at least one electronic component (130) adapted to be inserted into/extracted from said second housing seat (120),
- a first extraction aid element (140) configured to extract said second portion (102) from said first housing seat (110).

12. Device (200) according to claim 11, wherein said device (200) is wearable.

13. Frame (300) comprising a front (310) and at least one rod (100), said rod (100) comprising:
- a first portion (101) associated with said front (310), said first portion (101) comprising a first housing seat (110),
- a second portion (102) rotatably coupled to said first portion (101), said second portion (102) being insertable into/extractable from said first housing seat (110),
said second portion (102) comprising:
- a second housing seat (120) facing a first bottom wall (111) of said first housing seat (110) when said second portion (102) in inserted into said first housing seat (110), said second housing seat (120) being accessible when said second portion (102) is extracted from said first housing seat (110),
- at least one electronic component (130) adapted to be inserted into/extracted from said second housing seat (120),
- a first extraction aid element (140) configured to extract said second portion (102) from said first housing seat (110).

14. Eyewear comprising a frame (300), said frame (300) comprising a front (310) and at least one rod (100), said rod (100) comprising:
- a first portion (101) associated with said front (310), said first portion (101) comprising a first housing seat (110),
- a second portion (102) rotatably coupled to said first portion (101), said second portion (102) being insertable into/extractable from said first housing seat (110),
said second portion (102) comprising:
- a second housing seat (120) facing a first bottom wall (111) of said first housing seat (110) when said second portion (102) in inserted into said first housing seat (110), said second housing seat (120) being accessible when said second portion (102) is extracted from said first housing seat (110),
- at least one electronic component (130) adapted to be inserted into/extracted from said second housing seat (120),
- a first extraction aid element (140) configured to extract said second portion (102) from said first housing seat (110).
